# EUROPEAN PATENT APPLICATION

(11) **EP 2 790 159 A1**
(43) Date of publication of application: **15.10.2014**
(21) Application number: 13182950.9
(22) Date of filing: 04.09.2013
(51) Int. Cl.: G07D 7/12

(54) **Fluorescence and afterglow detection device and sheet processing apparatus**

(30) Priority: 12.04.2013 JP 2013083706
(71) Applicant: Kabushiki Kaisha Toshiba, Minato-ku, Tokyo 105-8001 (JP)
(72) Inventor: Miura, Junji, Tokyo 105-8001 (JP); Ikari, Seiji, Tokyo 105-8001 (JP)
(74) Representative: Horn Kleimann Waitzhofer

(57) **Abstract**

According to one embodiment, there is provided a fluorescence and afterglow detection device to detect fluorescence and afterglow on a sheet printed with fluorescent ink and phosphorescent ink while the sheet is being conveyed, including: a first illuminator (21) to irradiate the sheet (1) that is being conveyed, with excitation light; a fluorescence detector (28) to detect fluorescence in an irradiation range of the first illuminator (21); an afterglow detector (29) to detect afterglow outside the irradiation range of the first illuminator (21), downstream of the fluorescence detector (28) in the conveying direction; an operation controller (41) to perform control to switch a conveying speed of the sheet (1); and a second illuminator (22) that is provided between a reading range of the afterglow detector (29) and a reading range of the fluorescence detector (28), to irradiate the sheet (1) with excitation light in a case where the conveying speed of the sheet (1) set by the operation controller (41) is not greater than a preset speed.

## Description

### FIELD

Embodiments described herein relate generally to a fluorescence and afterglow detection device and a sheet processing apparatus.

### BACKGROUND

Conventionally, sheet processing apparatuses that perform various checks of sheets have been put into practice. A sheet processing apparatus may include a fluorescence and afterglow detection device that detects fluorescence and afterglow on a sheet. The fluorescence and afterglow detection device detects fluorescence and afterglow on sheets printed with fluorescent ink and phosphorescent ink. Furthermore, the sheet processing apparatus is required to be capable of changing the processing speed stepwise or continuously. The sheets that are processed by the sheet processing apparatus may be banknotes, bills, or securities etc.

The fluorescence and afterglow detection device detects fluorescence in a state in which a sheet is irradiated with excitation light that excites fluorescent ink and phosphorescent ink. Furthermore, the fluorescence and afterglow detection device excites fluorescent ink and phosphorescent ink on a sheet by irradiating the fluorescent ink and the phosphorescent ink with the excitation light, and then stops the irradiation of the excitation light, and detects the afterglow. Accordingly, the afterglow has damping characteristics unique to the material, and thus, the detection result of the afterglow varies depending on the conveying speed of the sheet. Accordingly, the fluorescence and afterglow detection device is problematic in that it is difficult to adapt to variable processing speeds.

### SUMMARY OF THE INVENTION

It is an object of the present invention to provide a fluorescence and afterglow detection device and a sheet processing apparatus capable of adapting to variable processing speeds and more precisely detecting fluorescence and afterglow. This object is achieved with the fluorescence and afterglow detection device according to claim 1 and the sheet processing apparatus according to claim 6. Further aspects of the invention are discussed in the dependent claims.

### BRIEF DESCRIPTION OF THE DRAWINGS

FIG. 1 is a block diagram illustrating a sheet processing apparatus according to one embodiment;

FIG. 2 is a graph illustrating a fluorescence and afterglow detection device according to the embodiment;

FIG. 3 is a schematic front view illustrating the fluorescence and afterglow detection device according to the embodiment;

FIG. 4 is a block diagram illustrating the sheet processing apparatus according to the embodiment;

FIG. 5 is a graph illustrating the fluorescence and afterglow detection device according to the embodiment;

FIG. 6 is a graph illustrating the fluorescence and afterglow detection device according to the embodiment;

FIG. 7 is a graph illustrating the fluorescence and afterglow detection device according to the embodiment;

FIG. 8 is a schematic front view illustrating a fluorescence and afterglow detection device according to the embodiment; and

FIG. 9 is a schematic front view illustrating a fluorescence and afterglow detection device according to the embodiment.

### DETAILED DESCRIPTION

Hereinafter, a fluorescence and afterglow detection device and a sheet processing apparatus according to an embodiment will be described in detail with reference to the drawings.

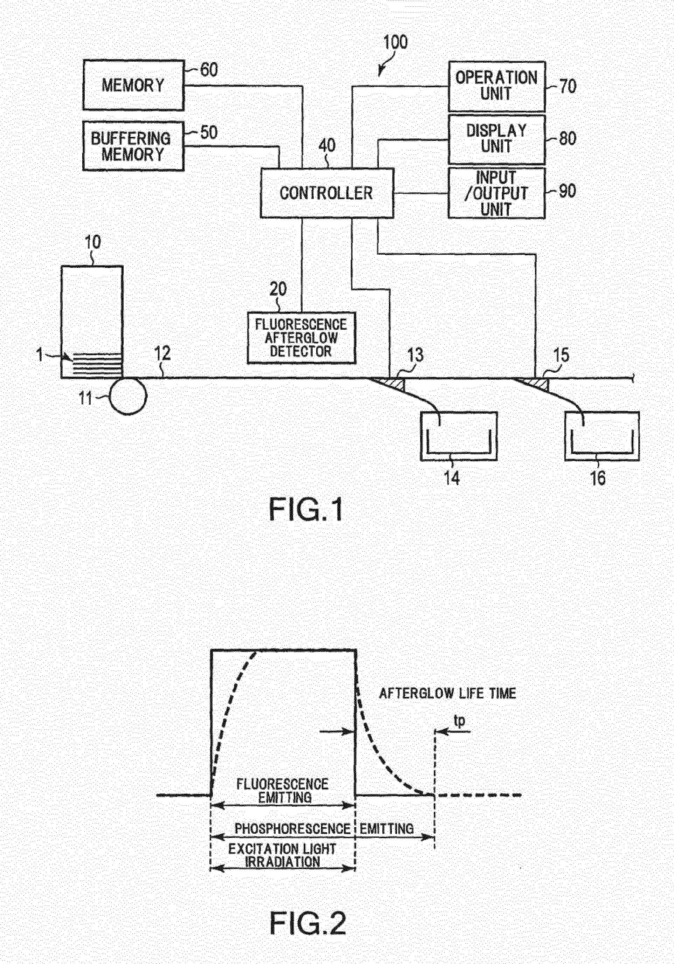

FIG. 1 shows a configuration example of a sheet processing apparatus 100 according to the embodiment.

The sheet processing apparatus 100 can identify such categories as denomination and generation of a sheet 1, the authenticity of the sheet 1, the fitness of the sheet 1, and the like, based on inspection results from various checkers.

The sheet processing apparatus 100 includes a supply unit 10, a separation roller 11, a conveyor 12, a first gate 13, a first stacker 14, a second gate 15, a second stacker 16, a fluorescence and afterglow detector 20, a controller 40, a buffering memory 50, a memory 60, an operation unit 70, a display unit 80, and an input/output unit 90. Furthermore, the sheet processing apparatus 100 includes a cutter unit (not shown) located in a stage behind the second gate 15. Also, the sheet processing apparatus 100 includes a plurality of checkers (not shown). For example, the sheet processing apparatus 100 may include a checker that checks such categories as denomination, generation, and direction of the sheet 1, a checker that checks the fitness of the sheet 1, and the like.

The controller 40 performs comprehensive control of the operation of each unit in the sheet processing apparatus 100. The controller 40 includes a CPU, a random access memory, a program memory, a non-volatile memory, and the like. The CPU performs various types of arithmetic processing. The random access memory temporarily stores results of arithmetic processing performed by the CPU. The program memory and the non-volatile memory store various programs that are to be executed by the CPU, control data, and the like. The controller 40 can perform various types of processing by causing the CPU to execute programs stored in the program memory.

The supply unit 10 accommodates sheets 1 that are to be fed into the sheet processing apparatus 100. The supply unit 10 receives a stack of the sheets 1 overlapping one on top of another.

The separation roller 11 is disposed at the lower end of the supply unit 10. When the sheets 1 are loaded into the supply unit 10, the separation roller 11 is in contact with the lower end in the accumulating direction of the loaded sheets 1. With rotation of the separation roller 11, the sheets 1 set in the supply unit 10 are fed sheet by sheet from the lower end of the accumulating direction into the sheet processing apparatus 100.

The separation roller 11 feeds, for example, one sheet 1 every time the separation roller 11 rotates once. Accordingly, the separation roller 11 feeds the sheets 1 at a constant pitch. The sheet 1 fed by the separation roller 11 is introduced onto the conveyor 12.

The conveyor 12 is a conveyer unit that conveys the sheet 1 to various units in the sheet processing apparatus 100. The conveyor 12 includes a conveyer belt (not shown), a drive pulley (not shown), and the like. The conveyor 12 drives the drive pulley using a drive motor (not shown). The conveyer belt operates together with the drive pulley.

The conveyor 12 uses the conveyer belt to convey, at a constant speed, the sheet 1 fed by the separation roller 11. In the description below, the side closer to the separation roller 11 on the conveyor 12 is referred to as "upstream side", and the opposite side is referred to as "downstream side".

The fluorescence and afterglow detector 20 detects fluorescence and afterglow on the sheet 1 that is being conveyed by the conveyor 12. The fluorescence and afterglow detector 20 includes, for example, a camera for detecting fluorescence on the sheet 1, a camera for detecting afterglow on the sheet 1, and illuminators for irradiating the sheet 1 with excitation light that excites the fluorescent ink as well as the phosphorescent ink on the sheet 1. The fluorescence and afterglow detector 20 checks the authenticity of the sheet 1 based on the detected values of fluorescence and afterglow. That is to say, the fluorescence and afterglow detector 20 checks whether the sheet 1 is genuine or counterfeit. The fluorescence and afterglow detector 20 transmits the inspection result to the controller 40.

Also, the checkers in the sheet processing apparatus 100 transmit inspection results regarding the category of the sheet 1, inspection results regarding the fitness of the sheet 1, and the like to the controller 40. Accordingly, the controller 40 can acquire inspection results regarding the authenticity, the category, the fitness, and the like, for each sheet 1.

The first gate 13 and the second gate 15 are arranged on the conveyor 12 downstream of the fluorescence and afterglow detector 20. Each of the first gate 13 and the second gate 15 operates under the control of the controller 40. The controller 40 controls the first gate 13 and the second gate 15 according to the various inspection results on the sheet 1.

The first gate 13 switches the destination of the sheet 1 between the first stacker 14 and the second gate 15. Furthermore, the second gate 15 switches the destination of the sheet 1 between the second stacker 16 and the cutter unit.

For example, the controller 40 controls the first gate 13 and the second gate 15 such that any sheet 1 that has been determined to be genuine is conveyed to the first stacker 14 or the second stacker 16. Also, the controller 40 controls the first gate 13 and the second gate 15 according to inspection results regarding the category of the sheet 1. That is to say, the controller 40 controls each unit such that genuine sheets 1 are sorted according to the category thereof and accumulated.

Furthermore, the controller 40 may also be configured so as to control the first gate 13 and the second gate 15 based on inspection results regarding the fitness. Accordingly, the controller 40 can perform control such that any sheet 1 that has been determined to be unfit and be unsuitable for reuse based on inspection results regarding the fitness is conveyed to the cutter unit located in a stage behind the second gate 15. Accordingly, the controller 40 can cause the cutter unit to cut any sheet 1 that has been determined to be unfit.

Furthermore, the controller 40 controls the gates such that any sheet 1 that has been determined to be counterfeit is conveyed to a storage for rejection (not shown).

The buffering memory 50 stores various processing results, inspection results, and the like. For example, the buffering memory 50 can store detected values of fluorescence and afterglow acquired by the fluorescence and afterglow detector 20, inspection results supplied from the checkers, and the like. Note that the random access memory, the non-volatile memory, or the like provided in the controller 40 may be used as the buffering memory 50.

The memory 60 stores data such as various parameters used in the above-described checks. The memory 60 stores, for example, in advance parameters for each category of the sheet 1. The controller 40 can supply the parameters stored in the memory 60 to the fluorescence and afterglow detector 20 and the checkers. Accordingly, the fluorescence and afterglow detector 20 and the checkers can identify the category, the fitness, and the authenticity of the sheet 1. That is to say, the controller 40 identifies a sheet as an identifying unit.

The operation unit 70 accepts various types of operational input from the operator. The operation unit 70 generates an operation signal based on the operation input by the operator, and transmits the generated operation signal to the controller 40.

The display unit 80 displays various screens under the control of the controller 40. For example, the display unit 80 displays various operation guides, processing results, and the like to the operator. Note that the operation unit 70 and the display unit 80 may be unitarily formed as a touch panel.

The input/output unit 90 exchanges data with an external device or a storage medium connect to the sheet processing apparatus 100. For example, the input/output unit 90 includes a disk drive, a USB connector, a LAN connector, other interfaces, or the like capable of exchanging data. The sheet processing apparatus 100 can acquire data from an external device or a storage medium connected to the input/output unit 90. Furthermore, the sheet processing apparatus 100 can transmit processing results to an external device or a storage medium connected to the input/output unit 90.

The sheet 1 that is to be processed by the sheet processing apparatus 100 has been printed with fluorescent ink containing a fluorescent material and phosphorescent ink containing a phosphorescent material.

A fluorescent material is excited, for example, by light having a predetermined wavelength (excitation light) such as ultraviolet light. The fluorescent material emits light (fluorescence) while being excited. That is to say, the fluorescent material emits fluorescence while the excitation light is being irradiated thereon, and stops the fluorescence emitting immediately after the irradiation of the excitation light is stopped. Note that light emitted from the fluorescent material (fluorescent ink) while the excitation light is being irradiated thereon is referred to as "fluorescence".

Furthermore, a phosphorescent material is excited, for example, by light having a predetermined wavelength (excitation light) such as ultraviolet light. The phosphorescent material starts to emit light with a delay when being excited, and stops the emitting with a delay after the irradiation of the excitation light is stopped. That is to say, the phosphorescent material continues to emit light even after the irradiation of the excitation light is stopped. Note that light emitted from the phosphorescent material (phosphorescent ink) after the irradiation of the excitation light is stopped is referred to as "afterglow".

FIG. 2 shows an example of light emitting characteristics of a phosphorescent material and a fluorescent material. The sheet processing apparatus 100 can switch the conveying speed of the sheet 1 stepwise or continuously. Accordingly, the time from when the sheet 1 is positioned in the range in which excitation light is irradiated thereon to when the sheet 1 reaches the position at which afterglow is detected varies depending on the conveying speed. Accordingly, it is difficult to obtain accurate detected values of afterglow due to the influence of damping characteristics.

To address this, the fluorescence and afterglow detector 20 controls the operation of illuminators that irradiate the sheet 1 with the excitation light, in accordance with the conveying speed of the sheet 1.

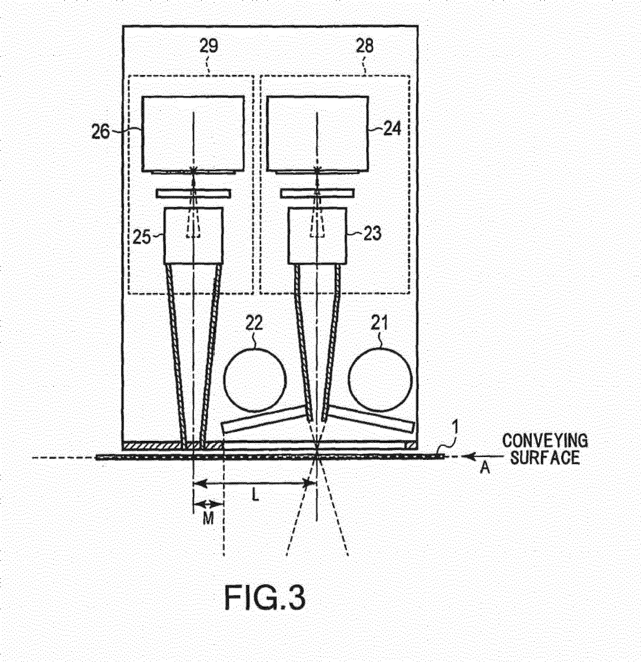

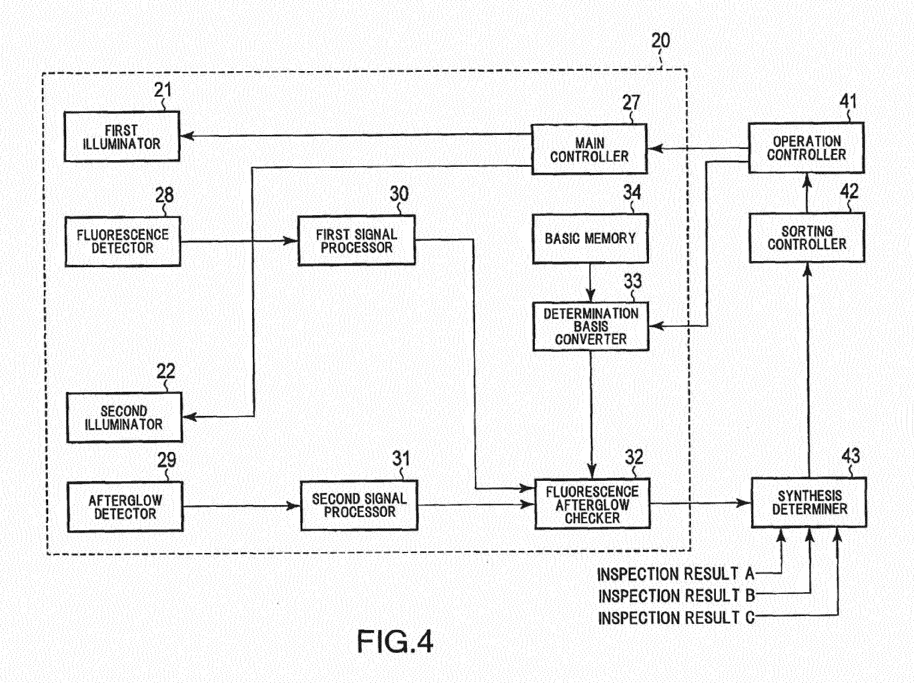

FIGS. 3 and 4 show an example of the configuration of the fluorescence and afterglow detector 20 and the function of the controller 40. FIG. 3 shows an example of the mechanical configuration of the fluorescence and afterglow detector 20. Furthermore, FIG. 4 shows an example of the control system of the fluorescence and afterglow detector 20 and the function of the controller 40.

The sheet 1 is conveyed by the drive pulley at a constant speed in the direction of arrow A on the conveying surface in a state in which the sheet 1 is held by the conveyer belt of the conveyor 12.

As shown in FIG. 3, the fluorescence and afterglow detector 20 includes a first illuminator 21, a second illuminator 22, a fluorescence detector 28, and an afterglow detector 29. The fluorescence detector 28 includes a first optical system 23 and a first sensor 24. Furthermore, the afterglow detector 29 includes a second optical system 25 and a second sensor 26.

Furthermore, as shown in FIG. 4, the fluorescence and afterglow detector 20 includes an main controller 27, a first signal processor 30, a second signal processor 31, a fluorescence and afterglow checker 32, a determination standard converter 33, and a basic memory 34. Note that, although FIG. 4 shows a fluorescence and afterglow detector 20 that includes one second illuminator 22, the number of second illuminators 22 may be singular or may be plural. The first illuminator 21 and the second illuminator 22 irradiate, with the excitation light, the sheet 1 that is being conveyed by the conveyor 12. The first illuminator 21 and the second illuminator 22 irradiate the sheet 1 with light having a wavelength at which fluorescent ink and phosphorescent ink on the sheet 1 can be excited.

Each of the first illuminator 21 and the second illuminator 22 includes a light source and an optical system. The light source is an element that emits light. For example, the light source includes an LED, a cold-cathode tube, or other light-emitting elements. The light source irradiates the sheet 1, for example, with ultraviolet light. The optical system converges and guides the light emitted from the light source, and irradiates the sheet 1 with the light.

The first illuminator 21 irradiates the sheet 1 with excitation light that can excite both of a fluorescent material and a phosphorescent material. The first illuminator 21 is on at all times, and irradiates, with the excitation light, the sheet 1 that is being conveyed.

The second illuminator 22 irradiates the sheet 1 with excitation light that can excite at least a phosphorescent material. Whether or not to turn on the second illuminator 22 is determined in response to the control of the controller 40. For example, if the conveying speed of the sheet 1 is lower than a preset speed, the controller 40 turns on the second illuminator 22. Furthermore, if the luminescence intensity of the second illuminator 22 can be adjusted, the controller 40 may be configured so as to adjust the luminescence intensity of the second illuminator 22 in accordance with the conveying speed of the sheet 1.

The fluorescence detector 28 is a camera that uses the first optical system 23 and the first sensor 24 to detect fluorescence in a predetermined reading range on the conveying surface on which the sheet 1 is conveyed. The first optical system 23 and the first sensor 24 detect fluorescence from the range in which excitation light is irradiated by the first illuminator 21. That is to say, the first optical system 23 and the first sensor 24 detect fluorescence from the reading range in the irradiation range in which excitation light is irradiated by the first illuminator 21.

Also, the first optical system 23 and the first sensor 24 may be configured so as to detect fluorescence from the range in which excitation light is irradiated by the first illuminator 21 and the second illuminator 22. That is to say, the first optical system 23 and the first sensor 24 can detect fluorescence from the reading range in the irradiation range in which excitation light is irradiated by the first illuminator 21 and the second illuminator 22.

The first optical system 23 includes a configuration for receiving light and forming an image of the received light on the first sensor 24, for example, such as a lens or a light-guiding member.

The first sensor 24 includes a light-receiving element that converts light received from a linear reading range into an electrical signal, that is, a detected value of fluorescence.

The afterglow detector 29 is a camera that uses the second optical system 25 and the second sensor 26 to detect afterglow in a predetermined reading range on the conveying surface on which the sheet 1 is conveyed. The second optical system 25 and the second sensor 26 detect afterglow from a range in which no excitation light is irradiated by the first illuminator 21 and the second illuminator 22. Accordingly, the fluorescence and afterglow detector 20 may be configured so as to include a light-shielding plate or the like for preventing the excitation light from the first illuminator 21 and the second illuminator 22 from being irradiated on the reading range of the second optical system 25 and the second sensor 26.

The second optical system 25 includes a configuration for receiving light and forming an image of the received light on the second sensor 26, for example, such as a lens or a light-guiding member.

The second sensor 26 includes a light-receiving element that converts light received from a linear reading range into an electrical signal, that is, a detected value of afterglow.

The first sensor 24 and the second sensor 26 can use a photomultiplier tube, an avalanche photodiode, a photodiode, or the like as the light-receiving element. Furthermore, the first sensor 24 and the second sensor 26 may be configured so as to include a line image sensor in which a plurality of light-receiving elements such as charge coupled devices (CCDs) or complimentary metal oxide semiconductor (CMOS) elements sufficiently sensitive to detect fluorescence and afterglow are arranged.

The main controller 27 performs comprehensive control of the operation of each unit in the fluorescence and afterglow detector 20. The main controller 27 includes a CPU, a random access memory, a program memory, a non-volatile memory, and the like. The CPU performs various types of arithmetic processing. The random access memory temporarily stores results of arithmetic processing performed by the CPU. The program memory and the non-volatile memory store various programs that are to be executed by the CPU, control data, and the like. The main controller 27 can perform various types of processing by causing the CPU to execute programs stored in the program memory.

The main controller 27 controls the operations of the first illuminator 21 and the second illuminator 22.

For example, the main controller 27 causes the CPU to execute programs, thereby functioning as the first signal processor 30, the second signal processor 31, the fluorescence and afterglow checker 32, and the determination standard converter 33. Furthermore, the non-volatile memory of the main controller 27 functions as the basic memory 34 that stores, in advance, various determination standards used as standards in the checks by the fluorescence and afterglow checker 32.

Also, the controller 40 of the sheet processing apparatus 100 causes the CPU to execute programs, thereby functioning as an operation controller 41, a sorting controller 42, and a synthesis determiner 43.

The first signal processor 30 performs signal processing on the detected value of fluorescence supplied from the fluorescence detector 28. For example, the first signal processor 30 can acquire various characteristic amounts by performing signal processing on the detected value of fluorescence. The first signal processor 30 supplies the acquired characteristic amounts to the fluorescence and afterglow checker 32.

Furthermore, the second signal processor 31 performs signal processing on the detected value of afterglow supplied from the afterglow detector 29. For example, the second signal processor 31 can acquire various characteristic amounts by performing signal processing on the detected value of afterglow. The second signal processor 31 supplies the acquired characteristic amounts to the fluorescence and afterglow checker 32.

The fluorescence and afterglow checker 32 compares the characteristic amounts supplied from the first signal processor 30 and the second signal processor 31 and the determination standards from the determination standard converter 33, and determines the authenticity of the sheet 1 based on the comparison results. The fluorescence and afterglow checker 32 supplies the inspection result to the synthesis determiner 43 of the controller 40.

As described above, the basic memory 34 stores in advance various determination standards used as standards in the checks by the fluorescence and afterglow checker 32. Furthermore, the determination standard converter 33 performs processing on the determination standards stored in the basic memory 34, and supplies the determination standards to the fluorescence and afterglow checker 32. For example, the determination standard converter 33 converts the determination standards in accordance with the conveying speed of the sheet 1. For example, the determination standard converter 33 converts the resolution of the determination standards in accordance with the conveying speed of the sheet 1.

The operation controller 41 performs comprehensive control of the operations of the conveyor 12, the fluorescence and afterglow detector 20, the main controller 27, and other checkers. For example, the operation controller 41 performs control to switch the conveying speed of the sheet 1 between four stages.

The sorting controller 42 switches the destination of the sheet 1 based on the determination result from the synthesis determiner 43. The synthesis determiner 43 determines the destination of the sheet 1 based on the plurality of inspection results supplied from the fluorescence and afterglow detector 20 and other checkers. The sorting controller 42 controls the operations of the first gate 13, the second gate 15, other gates, and the like such that the sheet 1 is conveyed to the destination determined by the synthesis determiner 43. Accordingly, the sheet processing apparatus 100 switches the destination of the sheet 1 based on the determination results. The sheets 1 can be sorted according to the determination results regarding the authenticity, the category, the fitness, and the like of the sheets 1.

Note that the reading range of the first optical system 23 and the first sensor 24 (or the downstream end of the irradiation range of the first illuminator 21) is separated by a distance L from the reading range of the second optical system 25 and the second sensor 26. Furthermore, the downstream end of the irradiation range of the second illuminator 22 is separated by a distance M from the reading range of the second optical system 25 and the second sensor 26. That is to say, if the second illuminator 22 is not on, the sheet 1 is conveyed in a state in which no excitation light is irradiated for a duration of up to distance L / conveying speed, and enters the reading range of the second optical system 25 and the second sensor 26. Furthermore, if the second illuminator 22 is on, the sheet 1 is conveyed in a state in which no excitation light is irradiated for a duration of up to distance M / conveying speed, and enters the reading range of the second optical system 25 and the second sensor 26.

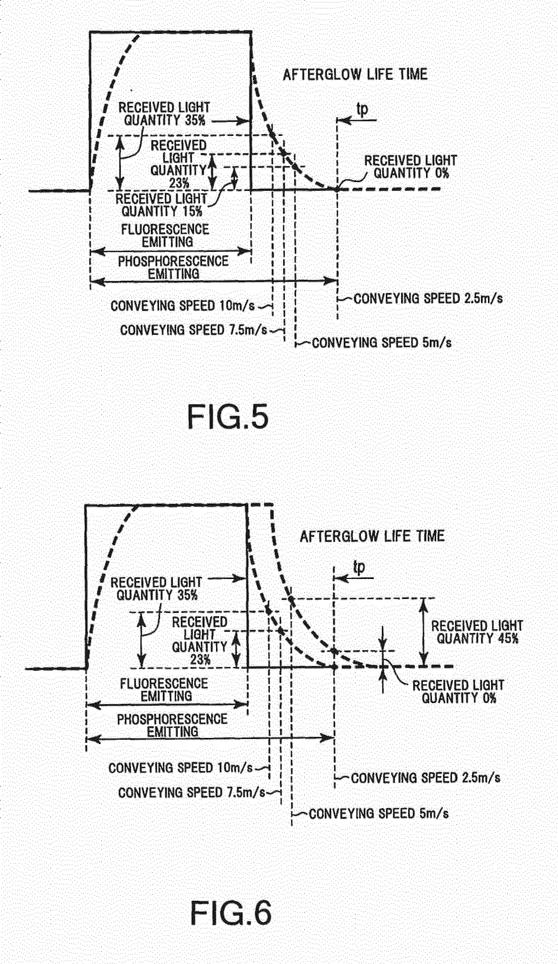

FIG. 5 shows a relationship between the conveying speed of the sheet 1 and the detected value of afterglow, based on the afterglow life characteristics of a phosphorescent material. Let us consider the case that the sheet 1 printed with phosphorescent ink containing a phosphorescent material with certain afterglow life characteristics is to be processed. Also, it is assumed that the phosphorescent material on the sheet 1 has an afterglow that disappears in tp (sec). Furthermore, FIG. 5 shows an example in which the second illuminator 22 is not on. That is to say, the sheet 1 is conveyed in a state in which no excitation light is irradiated for a duration of distance L / conveying speed.

The detected value of afterglow in a state in which excitation light is irradiated is taken as 100%. If the conveying speed of the sheet 1 is 10 m/s, the afterglow value detected by the second optical system 25 and the second sensor 26 is 35%. Furthermore, if the conveying speed of the sheet 1 is 7.5 m/s, the afterglow value detected by the second optical system 25 and the second sensor 26 is 23%. Furthermore, if the conveying speed of the sheet 1 is 5.0 m/s, the afterglow value detected by the second optical system 25 and the second sensor 26 is 15%. Furthermore, if the conveying speed of the sheet 1 is 2.5 m/s, the afterglow value detected by the second optical system 25 and the second sensor 26 is 0%. In this manner, the lower the conveying speed is, the larger the afterglow disappearance rate is.

FIG. 6 shows a relationship between the conveying speed of the sheet 1 and the detected value of afterglow, based on the afterglow life characteristics of a phosphorescent material. Let us consider the case that the sheet 1 printed with phosphorescent ink containing a phosphorescent material with certain afterglow life characteristics is to be processed. Also, it is assumed that the phosphorescent material on the sheet 1 has afterglow that disappears in tp (sec). Furthermore, FIG. 6 shows an example in which the conveying speed of the sheet 1 is lower than a preset speed, and the second illuminator 22 is turned on. Note that, in this example, if the conveying speed of the sheet 1 is not greater than 5 m/s, that is, if the conveying speed of the sheet 1 is 5 m/s or less, the controller 40 always turns on the second illuminator 22. If the second illuminator 22 is on, the sheet 1 is conveyed in a state in which no excitation light is irradiated for a duration of distance M / conveying speed.

The detected value of afterglow in a state in which excitation light is irradiated is taken as 100%. If the conveying speed of the sheet 1 is 10 m/s, the afterglow value detected by the second optical system 25 and the second sensor 26 is 35%. Furthermore, if the conveying speed of the sheet 1 is 7.5 m/s, the afterglow value detected by the second optical system 25 and the second sensor 26 is 23%. As described above, if the conveying speed of the sheet 1 is more than 5 m/s, the controller 40 does not turn on the second illuminator 22.

Furthermore, if the conveying speed of the sheet 1 is 5.0 m/s, the controller 40 turns on the second illuminator 22. If the conveying speed of the sheet 1 is 5.0 m/s, the afterglow value detected by the second optical system 25 and the second sensor 26 is 45%. Furthermore, if the conveying speed of the sheet 1 is 2.5 m/s, the afterglow value detected by the second optical system 25 and the second sensor 26 is 10%.

As described above, if the conveying speed of the sheet 1 is lower than a preset speed, the fluorescence and afterglow detector 20 turns on the second illuminator 22 such that the zone in which no excitation light is irradiated is made shorter. Accordingly, the fluorescence and afterglow detector 20 can delay the time at which afterglow starts to disappear. As a result, even if the conveying speed of the sheet 1 is low, the fluorescence and afterglow detector 20 can cause the sheet 1 to reach the reading range of the second optical system 25 and the second sensor 26 in a state in which afterglow still remains. Accordingly, the fluorescence and afterglow detector 20 can detect afterglow even if the conveying speed of the sheet 1 is low.

Furthermore, for example, let us consider the case that the second illuminator 22 is on at all times regardless of the conveying speed of the sheet 1. With this configuration, the afterglow detected is very intense in the case where the conveying speed of the sheet 1 is high compared with cases where the conveying speed of the sheet 1 is low. Accordingly, the difference between the value detected when the conveying speed of the sheet 1 is high and the value detected when the conveying speed is low is large. The signal range of the second sensor 26 for reproducibly detecting the quantity of light received when the conveying speed is low and the signal range of the second sensor 26 for reproducibly detecting the quantity of light received when the conveying speed is high have different problems in terms of ensuring a proper SN ratio and the like.

However, as described above, with a configuration that turns on the second illuminator 22 in accordance with the conveying speed of the sheet 1, the fluorescence and afterglow detector 20 can reduce the difference between the intensity of afterglow incident on the second sensor 26 when the conveying speed is high and the intensity when the conveying speed is low. Accordingly, the fluorescence and afterglow detector 20 can stably detect afterglow regardless of the conveying speed of the sheet 1. As a result, it is possible to provide a fluorescence and afterglow detection device and a sheet processing apparatus capable of adapting to variable processing speeds and more precisely detecting fluorescence and afterglow.

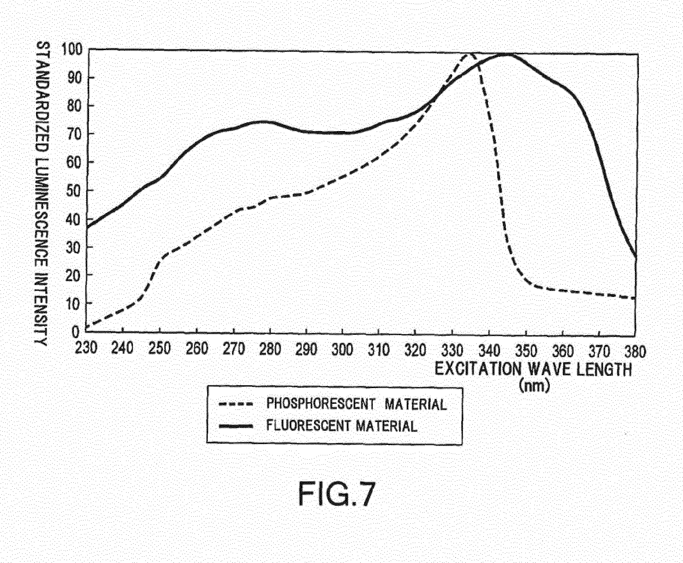

Note that, in the foregoing embodiment, it was described that the first illuminator 21 irradiates the sheet 1 with excitation light that can excite both of a fluorescent material and a phosphorescent material. Furthermore, it was described that the second illuminator 22 irradiates the sheet 1 with excitation light that can excite a phosphorescent material. Specifically, these configurations are determined by the excitation wavelength characteristics of a fluorescent material and a phosphorescent material as shown in FIG. 7.

FIG. 7 shows an example of the excitation wavelength characteristics of a certain fluorescent material and a certain phosphorescent material. The first illuminator 21 is required to excite both of the phosphorescent material and the fluorescent material. Accordingly, the first illuminator 21 is desirably configured so as to emit excitation light having a wavelength of approximately 330 nm ± 10 as shown in FIG. 7. If the first illuminator 21 is configured so as to irradiate the sheet 1 with excitation light having a wavelength of approximately 330 nm ± 10, the first illuminator 21 can set the luminescence intensities of both of the phosphorescent material and the fluorescent material to nearly 80% of the peak intensities.

Furthermore, it is sufficient that the second illuminator 22 is configured so as to excite at least the phosphorescent material. Accordingly, the second illuminator 22 is also desirably configured so as to emit excitation light having a wavelength of approximately 330 nm ± 10 as shown in FIG. 7. If the second illuminator 22 is configured so as to irradiate the sheet 1 with excitation light having a wavelength of approximately 330 nm ± 10, the second illuminator 22 can set the luminescence intensity of the phosphorescent material to nearly 80% of the peak intensity.

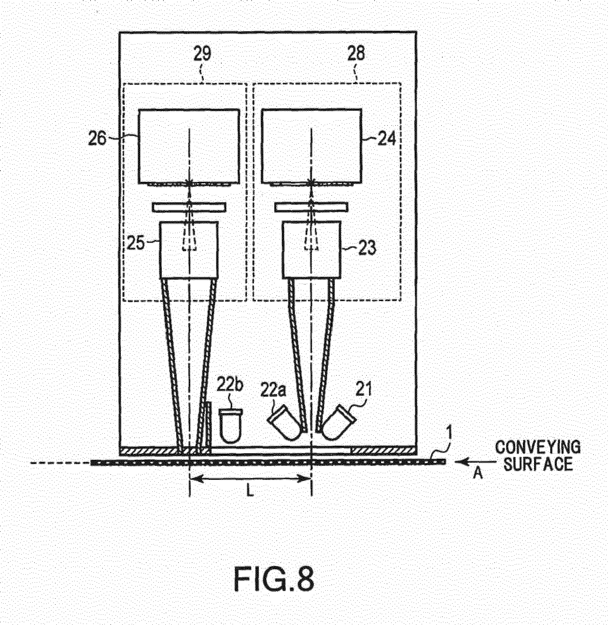

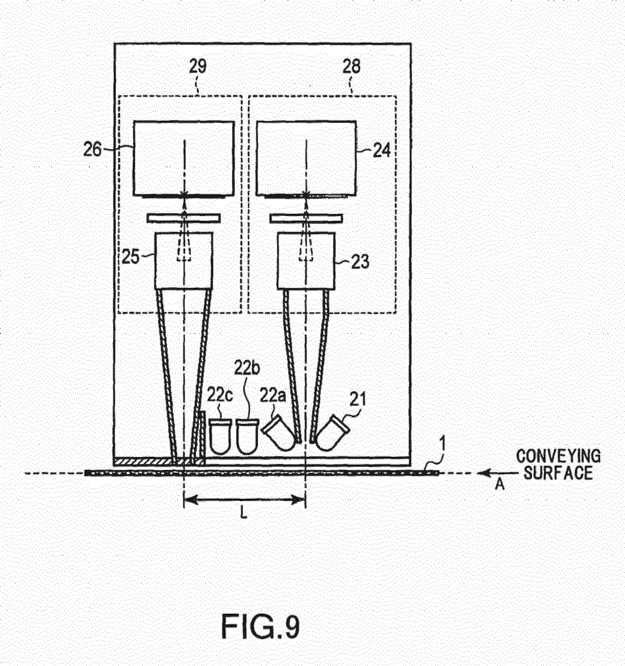

FIGS. 8 and 9 show other configuration examples of the fluorescence and afterglow detector 20. The fluorescence and afterglow detector 20 shown in FIG. 8 includes the first illuminator 21, second illuminators 22a and 22b, the fluorescence detector 28, and the afterglow detector 29. The fluorescence detector 28 includes the first optical system 23 and the first sensor 24. Furthermore, the afterglow detector 29 includes the second optical system 25 and the second sensor 26.

Furthermore, the fluorescence and afterglow detector 20 shown in FIG. 9 includes the first illuminator 21, second illuminators 22a, 22b, and 22c, the fluorescence detector 28, and the afterglow detector 29. The fluorescence detector 28 includes the first optical system 23 and the first sensor 24. Furthermore, the afterglow detector 29 includes the second optical system 25 and the second sensor 26. Note that the configurations of the first illuminator 21, the fluorescence detector 28, and the afterglow detector 29 are the same as the configurations described in FIGS. 3 and 4, and thus, a detailed description thereof has been omitted.

That is to say, the fluorescence and afterglow detector 20 shown in FIG. 8 includes two second illuminators 22a and 22b. Furthermore, the fluorescence and afterglow detector 20 shown in FIG. 9 includes three second illuminators 22a, 22b, and 22c.

The second illuminators 22a, 22b, and 22c irradiate the sheet 1 with excitation light that can excite at least a phosphorescent material. Whether or not to turn on each of the second illuminators 22a, 22b, and 22c is determined by the main controller 27 in response to the control to switch the conveying speed of the sheet by the operation controller 41. For example, the main controller 27 selects an illuminator that is to be turned on from the second illuminators 22a, 22b, and 22c, in accordance with the conveying speed of the sheet 1. That is to say, the fluorescence and afterglow detector 20 can adjust the irradiation range in which the sheet 1 is irradiated with the excitation light, in accordance with the conveying speed of the sheet 1. Accordingly, the fluorescence and afterglow detector 20 can adjust the distance in which no excitation light is irradiated, in accordance with the conveying speed of the sheet 1.

As a result, the fluorescence and afterglow detector 20 can further reduce a difference between the intensity of afterglow incident on the second sensor 26 when the conveying speed is high and the intensity when the conveying speed is low. Accordingly, the fluorescence and afterglow detector 20 can more stably detect afterglow regardless of the conveying speed of the sheet 1.

Note that, in the foregoing embodiments, it was described that the sheet processing apparatus 100 is configured so as to include a checker that checks the fitness and a checker that checks the category in addition to the fluorescence and afterglow detector 20, but the configuration is not limited to this. The sheet processing apparatus 100 may be configured so as to further include other checkers. For example, the sheet processing apparatus 100 may include a checker that checks whether or not there is a tape attached to the sheet 1, a checker that checks whether or not the sheet 1 has a hole or torn part, a checker that checks the magnetic properties of the sheet 1, a checker that checks the thickness of the sheet 1, and the like. In this case, the synthesis determiner 43 performs synthesis determination on the various inspection results, thereby determining the destination of the sheet 1.

Note that the functions described in the foregoing embodiments can be realized not only by hardware, but also by software by causing a computer to read programs in which the functions have been written. Furthermore, the functions may be realized by selecting either software or hardware as appropriate.

The present invention is not limited to the foregoing embodiments, and may be embodied in practice with constituent elements modified without departing from the gist of the invention. Furthermore, the plurality of constituent elements disclosed in the foregoing embodiments may be combined as appropriate to realize various forms of the invention. For example, some constituent elements may be omitted from all constituent elements shown in the foregoing embodiments. Moreover, constituent elements of different embodiments may be combined as appropriate.

## Claims

1. A fluorescence and afterglow detection device to detect fluorescence and afterglow on a sheet printed with fluorescent ink and phosphorescent ink while the sheet is being conveyed, comprising:
a first illuminator (21) to irradiate the sheet (1) that is being conveyed, with excitation light;
a fluorescence detector (28) to detect fluorescence in an irradiation range of the first illuminator (21);
an afterglow detector (29) to detect afterglow outside the irradiation range of the first illuminator (21), downstream of the fluorescence detector (28) in the conveying direction;
an operation controller (41) to perform control to switch a conveying speed of the sheet (1); and
a second illuminator (22) that is provided between a reading range of the afterglow detector (29) and a reading range of the fluorescence detector (28), to irradiate the sheet (1) with excitation light in a case where the conveying speed of the sheet (1) set by the operation controller (41) is not greater than a preset speed.

2. The device according to claim 1, wherein the second illuminator (22) adjusts an irradiation range in which the sheet (1) is irradiated with excitation light, in accordance with the conveying speed of the sheet (1) set by the operation controller (41).

3. The device according to claim 2, wherein the device comprises a plurality of second illuminators (22), and an illuminator being turned on is selected from the plurality of second illuminators (22).

4. The device according to claim 1, wherein the first illuminator (21) irradiates the sheet (1) with excitation light that excites both of the fluorescent ink and the phosphorescent ink, and the second illuminator (22) irradiates the sheet (1) with excitation light that excites the phosphorescent ink.

5. The device according to claim 1, wherein the first illuminator (21) and the second illuminator (22) irradiate the sheet (1) with excitation light having a wavelength of 320 nm to 340 nm.

6. A sheet processing apparatus, comprising:
a conveyer unit (12) to convey a sheet (1) printed with fluorescent ink and phosphorescent ink;
the device according to any of claims 1 to 5;
an identifying unit (40) to identify the sheet (1) based on detected values of the fluorescence and the afterglow and preset standard parameters; and
a sorting controller (42) to sort the sheet based on a result of the identification by the identifying unit (40).

7. The device according to claim 6, wherein the second illuminator (22) adjusts an irradiation range in which the sheet (1) is irradiated with excitation light, in accordance with the conveying speed of the sheet (1) set by the operation controller (41).

8. The device according to claim 7, wherein the device comprises a plurality of second illuminators (22), and an illuminator being turned on is selected from the plurality of second illuminators (22).

9. The device according to claim 6, wherein the first illuminator (21) irradiates the sheet (1) with excitation light that excites both of the fluorescent ink and the phosphorescent ink, and the second illuminator (22) irradiates the sheet (1) with excitation light that excites the phosphorescent ink.

10. The device according to claim 6, wherein the first illuminator (21) and the second illuminator (22) irradiate the sheet (1) with excitation light having a wavelength of 320 nm to 340 nm.
